# EUROPÄISCHE PATENTSCHRIFT

(11) **EP 1 490 608 B1**
(45) Veröffentlichungstag und Bekanntmachung des Hinweises auf die Patenterteilung: **11.01.2006**
(21) Anmeldenummer: 03720386.6
(22) Anmeldetag: 28.03.2003
(51) Int. Cl.: F16H 3/00, F16H 61/04

(54) **SYNCHRONISIEREINRICHTUNG FÜR EIN DOPPELKUPPLUNGSGETRIEBE AUF GRUNDLAGE WENIGSTENS EINES PLANETENRADSATZES UND ENTSPRECHENDES DOPPELKUPPLUNGSGETRIEBE**
SYNCHRONISATION DEVICE FOR A DUAL CLUTCH GEARBOX BASED ON AT LEAST ONE PLANETARY GEAR SET, AND CORRESPONDING DUAL CLUTCH GEARBOX
DISPOSITIF DE SYNCHRONISATION POUR BOITE DE VITESSES A DOUBLE EMBRAYAGE SUR LA BASE D'AU MOINS UN JEU DE SATELLITES ET BOITE DE VITESSES A DOUBLE EMBRAYAGE CORRESPONDANTE

(30) Priorität: 30.03.2002 DE 10214478
(43) Veröffentlichungstag der Anmeldung: 29.12.2004
(73) Patentinhaber: ZF FRIEDRICHSHAFEN Aktiengesellschaft, 88038 Friedrichshafen (DE)
(72) Erfinder: KUHSTREBE, Jochen, 97318 Biebelried/Westheim (DE)
(86) Internationale Anmeldenummer: PCT/EP2003/003266
(87) Internationale Veröffentlichungsnummer: WO 2003/083325

(56) Entgegenhaltungen:
- EP-A- 0 845 618
- WO-A-01/61214
- DE-A- 3 417 504
- DE-A- 3 543 269
- DE-A- 4 122 628

## Beschreibung

Die Erfindung betrifft ein Doppelkupplungsgetriebe für ein Kraftfahrzeug, umfassend eine erste Getriebeeingangswelle, der wenigstens ein erster Getriebegang zugeordnet ist, und eine zweite Getriebeeingangswelle, der wenigstens ein zweiter Getriebegang zugeordnet ist, wobei von den Getriebeeingangswellen, die zueinander im Wesentlichen gleichachsig verlaufen, eine als Hohlwelle ausgeführte äußere Getriebeeingangswelle eine innere Getriebeeingangswelle umschließt, und eine getriebeinterne Synchronisiereinrichtung, die dafür ausgelegt ist, eine Synchronisation von den Getriebegängen zugeordneten Drehzahlen beim Schalten von einem einer der Getriebeeingangswellen zugeordneten Gang zu einem der anderen der Getriebeingangswellen zugeordneten Gang im Sinne eines Abbremsens bzw. eines Beschleunigens zu ermöglichen oder zumindest zu unterstützend entsprechend dem Oberbegriff des Anspruchs 1 und wie aus der EP 0 845 618 A bekannt ist. Die Erfindung betrifft ferner eine Synchronisiereinrichtung für ein derartiges Doppelkupplungsgetriebe.

Doppelkupplungsgetriebe und Doppelkupplungen haben in jüngerer Zeit erneut ein größeres Interesse erfahren, da sie bei einer entsprechenden Automatisierung des Getriebes einen Schaltkomfort ähnlich wie bei einem herkömmlichen Automatikgetriebe mit Drehmomentwandler versprechen, aber hinsichtlich des energetischen Wirkungsgrads große Vorteile erwarten lassen. Ein wesentlicher Vorteil gegenüber herkömmlichen automatisierten Getriebe mit Einfachkupplung ist, dass bei entsprechender Zuordnung der Getriebegänge zu den Getriebeeingangswellen ein Schalten, insbesondere ein sequentielles Schalten, unter Erhalt der Motorzugkraft bzw. unter Erhalt von Schleppmomenten möglich ist, indem eine so genannte Überschneidungshaltung beim Schalten von einem der einen Getriebeeingangswelle zugeordneten Gang zu einem der anderen Getriebeeingangswelle zugeordneten Gang durchgeführt wird.

Je nach Gangabstufung und den involvierten Gängen (Ausgangsgang und Zielgang; unter Umständen wird man auch zwischen nicht unmittelbar in der Gangstufung nebeneinander liegenden Gängen zugkraftunterbrechungsfrei bzw. schleppmomentunterbrechungsfrei schalten wollen) muss vergleichsweise viel Synchronisationsarbeit geleistet werden. Hierzu wurde unter anderem vorgeschlagen, die Doppelkupplung selbst aktiv zur Unterstützung der Synchronisation bzw. - soweit möglich - zur Synchronisation selbst heranzuziehen durch entsprechende Betätigung der Kupplungsanordnungen. Beispielsweise offenbart speziell die DE 199 39 819 C1 ein Verfahren, das getriebeinterne Synchronisiereinrichtungen unterstützt. Auf getriebeinterne Synchronisiereinrichtungen kann nicht verzichtet werden, da das in der Patentschrift vorgestellte Verfahren nur begrenzt herkömmliche Synchronringe unterstützt und nicht über die momentane Motordrehzahl hinaus hochbeschleunigen kann.

Eine andere Möglichkeit ist, Synchron- oder Synchronisiereinrichtungen üblicher Art (etwa Synchronringe und dergleichen), aber mit einer Auslegung für höhere Belastung entsprechend der zu leistenden Synchronarbeit im Getriebe vorzusehen. Es ist aber bei diesem Ansatz mit vergleichsweise großem Bauraumbedarf zu rechnen, und es ist letztlich festzustellen, dass derartige Synchronisiereinrichtungen herkömmlichen Typs nicht das Optimum für die angesprochene Anwendung darstellen.

Ein anderer Ansatz ist, spezielle Synchronisierungseinrichtungen vorzusehen, die eine Momentenübertragung zwischen wenigstens einer dem einen Satz von Getriebegängen (beispielsweise den gradzahligen Vorwärtsgängen) zugeordneten Getriebewelle und wenigstens einer dem anderen Satz von Getriebegängen (beispielsweise den nicht-gradzahligen Vorwärtsgängen) zugeordneten Getriebewelle ermöglichen. Es wird hierzu als Beispiel auf die DE 44 36 526 A1 verwiesen, die eine Synchronisierung eines Doppelkupplungsgetriebes auf Grundlage einer zusätzlichen Welle und zugeordneten Zahnradpaaren offenbart. Die DE 44 36 526 A1 setzt allerdings ein Getriebe voraus, bei welchem die Gänge alle mit einem Faktor q abgestuft sind, so dass dieser Ansatz nicht für beliebige Doppelkupplungsgetriebe geeignet ist. Aufgrund der zusätzlich erforderlichen Welle baut das Getriebe überdies radial größer.

Die DE 34 17 504 A1 offenbart ferner eine Synchronisiereinrichtung auf Grundlage einer Lamellenbremse in Kombination mit einem Planetenradsatz, der eine zu einer Eingangswellenanordnung des Getriebes parallel im Abstand angeordnete Drehachse aufweist. Ein weiterer Planetenradsatz, der koaxial oder gleichachsig zu der Eingangswellenanordnung angeordnet ist, dient zur Verdopplung der Gangstufen vor einem 3-Wellen-Stufengetriebeteil, und ist mittels einer als Anfahrkupplung dienenden Schaltkupplung, die in der Art einer Doppelkupplung ausgeführt ist, zu- und abschaltbar. Der für Synchronisierungszwecke vorgesehene, nicht-koaxial zu der Eingangswellenanordnung angeordnete Planetenradsatz dient nur zum Hochbeschleunigen im Zuge der Synchronisation. Zum Abbremsen im Zuge der Synchronisation wird die erwähnte Lamellenbremse verwendet.

Demgegenüber liegt der Erfindung die Aufgabe zugrunde, ein Doppelkupplungsgetriebe mit koaxialen Eingangswellen zu schaffen, das eine zentrale Synchronisiereinrichtung aufweist, die kompakt baut und ohne übermäßigen mechanischen Aufwand in das Getriebe integrierbar ist. Die erfindungsgemäße Synchronisiereinrichtung soll ferner sowohl ein Hochbeschleunigen als auch ein Abbremsen einer jeweiligen Getriebewelle ermöglichen, und zwar - zumindest in einer bevorzugten Weiterbildung - sowohl in Bezug auf die der einen Getriebeeingangswelle zugeordneten Getriebegänge als auch in Bezug auf die der anderen Getriebeeingangswelle zugeordneten Getriebegänge.

Zur Lösung dieser Aufgabe wird vorgeschlagen, dass die Synchronisiereinrichtung wenigstens einen Planetenradsatz und eine zugeordnete Bremseinrichtung aufweist, der mit seinem Sonnenrad, seinem Planetenradträger und seinem Hohlrad im Wesentlichen gleichachsig zu den Getriebeeingangswellen angeordnet ist, und dass von dem Sonnenrad, dem Planetenradträger und dem Hohlrad eine erste Komponente mit der ersten Getriebeeingangswelle im Sinne einer Drehmitnahme gekoppelt oder koppelbar ist, eine zweite Komponente mit der zweiten Getriebeeingangswelle im Sinne einer Drehmitnahme gekoppelt oder koppelbar ist und eine dritte Komponente mittels der sich direkt oder indirekt an einem Getriebegehäuse abstützenden oder abstützbaren Bremseinrichtung der Synchronisiereinrichtung abbremsbar ist.

Erfindungsgemäß ist der Planetenradsatz gleichachsig (ggf. koaxial) zu den Getriebeeingangswellen angeordnet und ist mit den Getriebeeingangswellen selbst auf die angegebene Weise gekoppelt oder koppelbar. Zusätzliche Getriebewellen sind für die Synchronisation damit nicht erforderlich, so dass das Getriebe radial kompakt bauen kann. Auch der axiale Bauraumbedarf eines derartig angeordneten Planetenradsatzes ist nicht groß, so dass das Getriebe auch axial kompakt bauen kann.

Man kann vorteilhaft vorsehen, dass die erste Komponente fest mit der ersten Getriebeeingangswelle verbunden oder von dieser gebildet oder mit dieser einteilig ist und dass die zweite Komponente fest mit der zweiten Getriebeeingangswelle verbunden oder von dieser gebildet oder mit dieser einteilig ist.

Als besonders zweckmäßig hat sich erwiesen, dass das Hohlrad als dritte Komponente dient und mittels der Bremseinrichtung abbremsbar ist.

Bevorzugt ist vorgesehen, dass die Synchronisiereinrichtung zwei axial gegeneinander versetze Planetenradsätze aufweist, die derart den Getriebeeingangswellen zugeordnet sind, dass i) sowohl beim Hochschalten als auch beim Herunterschalten von einem ersten zu einem zweiten Gang sowie ii) sowohl beim Hochschalten als auch beim Herunterschalten von einem zweiten zu einem ersten Gang eine Synchronisation im Sinne eines Abbremsens bzw. eines Beschleunigens möglich ist. Somit kann sowohl beim Hochschalten als auch beim Herunterschalten mittels der Synchronisiereinrichtung synchronisiert werden oder zumindest die Synchronisation unterstützt werden, unabhängig davon, welcher Getriebeeingangswelle der Ausgangsgang zugeordnet ist. Gemeint sind hier Schaltvorgänge, bei denen von einem der einen Getriebeeingangswelle zugeordneten Ausgangsgang zu einem der andere Getriebeeingangswelle zugeordneten Zielgang geschaltet wird.

Man sollte in diesem Zusammenhang erwähnen, dass zusätzlich noch andere Synchronisiereinrichtungen, etwa der herkömmlichen Art (beispielsweise Synchronringe und dergleichen), vorgesehen sein können, die beispielsweise insbesondere für die Synchronisierung von Schaltvorgängen zuständig sind, bei denen der Ausgangsgang und der Zielgang der gleichen Getriebeeingangswelle zugeordnet sind. Es ist aber nicht zwingend, dass derartige Schaltvorgänge überhaupt möglich bzw. zugelassen sind.

Weiterbildend wird vorgeschlagen, dass der Planetenradsatz oder einer der beiden Planetenradsätze derart den Getriebeeingangswellen zugeordnet ist, dass sein Sonnenrad mit der inneren Getriebeeingangswelle im Sinne der Drehmitnahme gekoppelt oder koppelbar ist und sein Planetenradträger mit der äußeren Getriebeeingangswelle im Sinne der Drehmitnahme gekoppelt oder koppelbar ist.

Eine weitere, zusätzlich (im Falle von zwei Planetenradsätzen) oder alternativ (im Falle, dass nur ein Planetenradsatz vorgesehen ist) realisierbare Möglichkeit ist, dass der Planetenradsatz oder einer der beiden Planetenradsätze derart den Getriebeeingangswellen zugeordnet ist, dass sein Planetenradträger mit der inneren Getriebeeingangswelle im Sinne der Drehmitnahme gekoppelt oder koppelbar ist und sein Sonnenrad mit der äußeren Getriebeeingangswelle im Sinne der Drehmitnahme gekoppelt oder koppelbar ist.

Im Falle von zwei Planetenradsätzen ist es zur Bauraumersparnis und zur Reduzierung der Teilevielfalt bevorzugt, dass das Sonnenrad des einen Planetenradsatzes und der Planetenradträger des anderen Planetenradsatzes fest zur gemeinsamen Drehung miteinander verbunden sind und vorzugsweise Teile oder Abschnitte eines integralen oder einteiligen Bauteils sind.

Es hat sich als besonders zweckmäßig herausgestellt, den wenigstens einen Planetenradsatz in einem Axialbereich der Getriebeeingangswellen innerhalb des Getriebegehäuses anzuordnen, in dem die äußere Getriebeeingangswelle endet. Der mechanische Aufwand zur Integration und Ankopplung des Planetenradsatzes ist dann besonders niedrig. Dies gilt insbesondere dann, wenn zwei Planetenradsätze vorgesehen sind. In diesem Falle ist es besonders bevorzugt, dass die Planetenradsätze in einem Axialbereich der Getriebeeingangswellen innerhalb des Getriebegehäuses angeordnete sind, in dem die äußere Getriebeeingangswelle endet. In diesem Zusammenhang wird weiterbildend ferner vorgeschlagen, dass der Planetenradträger, der mit der inneren Getriebeeingangswelle im Sinne der Drehmitnahme gekoppelt oder koppelbar ist, axial jenseits des Endes der äußeren Getriebeeingangswelle angeordnet ist.

Betreffend die Art der Ankopplung der Planetenradsätze an den Getriebeeingangswellen bestehend grundsätzlich viele Möglichkeiten. Eine bevorzugte Ausgestaltung zeichnet sich dadurch aus, dass die äußere Getriebeeingangswelle einen einem/dem Ende der äußeren Getriebeeingangswelle im Getriebegehäuse näheren oder dieses Ende aufweisenden Abschnitt und einem diesen Ende ferneren Abschnitt aufweist, die über einen Planetenradträger drehfest miteinander gekoppelt sind. Eine weitere, ebenfalls vorteilhafte Möglichkeit ist, dass die äußere Getriebeeingangswelle wenigstens eine Öffnung aufweist, durch welche ein Planetenrad, das von einem mit der äußeren Getriebeeingangswelle im Sinne der Drehmitnahme gekoppelten oder koppelbaren Planetenradträger getragen ist, zu einem mit der inneren Getriebeeingangswelle im Sinne der Drehmitnahme gekoppelten oder koppelbaren Sonnenrad durchgreift.

Große Kostenvorteile aufgrund reduzierter Teilevielfalt ergeben sich dann, wenn im Falle von zwei Planetenradsätzen die beiden Planetenradsätze jeweils Sonnenräder gleichen Durchmessers oder/und gleicher Zähnezahl aufweisen oder/und Planetenräder gleichen Durchmessers oder/und gleicher Zähnezahl aufweisen oder/und Hohlräder gleichen Durchmessers oder/und gleicher Zähnezahl aufweisen. Im Falle von Hohlrädern gleichen Durchmessers ergibt sich der zusätzliche Vorteil, dass auch ggf. vorgesehene Lamellenpakete der Bremseinrichtung für die beiden Planetenradsätze identisch ausgeführt sein können. Dies gilt unter der Voraussetzung, dass die Bremseinrichtung auf die Hohlräder wirkt, wie dies bevorzugt ist.

Es hat sich als zweckmäßig herausgestellt, dass der Planetenradsatz drei Planetenräder aufweist bzw. dass die Planetenradsätze jeweils drei Planetenräder aufweisen. Hinsichtlich des herstellungstechnischen Aufwands und des Bauraumbedarfs ist es ferner vorteilhaft, wenn der Planetenradträger bzw. einer der Planetenradträger als Scheibe mit wenigstens einer hiervon vorstehenden Drehwelle für ein zugeordnetes Planetenrad ausgeführt ist.

Es wurde schon angesprochen, dass die Bremseinrichtung als Lamellen-Bremseinrichtung ausgeführt sein kann. Bei der Lamellen-Bremseinrichtung handelt es sich vorzugsweise um eine nasslaufende Lamellen-Bremseinrichtung.

Zur Lamellen-Bremseinrichtung wird weiterbildend vorgeschlagen, dass diese aufweist: wenigstens einen, vorzugsweise hydraulichen Aktuatator, wenigstens eine mit dem (jeweiligen) Hohlrad in Drehmitnahmeverbindung stehende, vorzugsweise nach radial außen vom Hohlrad vorstehende Lamelle und wenigstens eine am Getriebegehäuse gegen Drehung abgestützte Lamelle; wobei die wenigstens eine mit dem (jeweiligen) Hohlrad in Drehmitnahmeverbindung stehende Lamelle und die wenigstens eine am Getriebegehäuse gegen Drehung abgestützte Lamelle unter Vermittlung des wenigstens einen Aktuators in reibschlüssigen Eingriff bringbar sind, um das Hohlrad abzubremsen. Der Aktuator kann vorteilhaft als hydraulisch betätigbares Zylinder-Ringkolben-Gerät ausgeführt sein. Eine besonders bevorzugte Ausgestaltung des Doppelkupplungsgetriebes zeichnet sich dadurch aus, dass beiden Planetenradsätzen gemeinsam wenigstens ein Aktuator zugeordnet ist, der als doppelt-wirkendes Zylinder-Kolben-Gerät, vorzugsweise als doppelt-wirkendes Zylinder-Ringkolben-Gerät ausgeführt ist, unter dessen Vermittlung wahlweise entweder das Hohlrad des einen Planetenradsatzes oder das Hohlrad des anderen Planetenradsatzes abbremsbar ist.

Ferner wird vorgeschlagen, dass das Doppelkupplungsgetriebe eine Sensoranordnung aufweist zum Erfassen von wenigstens zwei den Getriebegängen zugeordneten Drehzahlen und eine Steuer/Regel-Einrichtung, die die erfassten Drehzahlen angebende Signale von der Sensoranordnung empfängt und auf Grundlage der empfangenden Signale im Zusammenhang mit einem Schaltvorgang die Bremseinrichtung bzw. wenigstens eine der Bremseinrichtungen ansteuert, um vermittels eines Abbremsens einer Drehzahl oder/und Beschleunigen einer Drehzahl zu synchronisieren oder eine Synchronisation zumindest zu unterstützen.

Die Erfindung betrifft ferner einen Kraftfahrzeug-Antriebsstrang, umfassend eine Antriebseinheit, ein erfindungsgemäßes Getriebe wie vorangehend beschrieben und hinsichtlich bevorzugten Weiterbildungen erläutert und eine Doppelkupplung zur Momentenübertragung zwischen der Antriebseinheit und dem Getriebe. Bei der Doppelkupplung kann es sich vorteilhaft um eine nasslaufende Lamellen-Doppelkupplung handeln, beispielsweise wie sie von der Anmelderin in verschiedenen Patentanmeldungen vorgeschlagen wurde.

Die Erfindung betrifft ferner eine Synchronisiereinrichtung für ein erfindungsgemäßes Doppelkupplungsgetriebe, umfassend wenigstens einen Planetenradsatz und eine zugeordnete Bremseinrichtung, wobei der Planetenradsatz mit seinem Sonnenrad, seinem Planetenradträger und seinem Hohlrad im Wesentlichen den gleichachsig zu den Getriebeeingangswellen angeordnet ist oder angeordnet werden kann, und wobei von dem Sonnenrad, dem Planetenradträger und dem Hohlrad eine erste Komponente mit der ersten Getriebeeingangswelle im Sinne einer Drehmitnahme gekoppelt oder koppelbar ist, eine zweite Komponente mit der zweiten Getriebeeingangswelle im Sinne einer Drehmitnahme gekoppelt oder koppelbar ist und eine dritte Komponente mittels der sich direkt oder indirekt an einem Getriebegehäuse abstützenden oder abstützbaren Bremseinrichtung der Synchronisiereinrichtung abbremsbar ist. Die Synchronisiereinrichtung kann entsprechend den obigen Ausführungen und Erläuterungen vorteilhaft weitergebildet werden.

Die Erfindung wird im Folgenden anhand von in den Figuren gezeigten schematischen, teilweise symbolhaften Ausführungsbeispielen näher erläutert.
- Fig. 1: zeigt in den Teilfiguren 1a und 1b schematisch jeweils einen Kraftfahrzeug-Antriebsstrang mit einer Antriebseinheit, einem Doppelkupplungsgetriebe und einem Doppelkupplungsgetriebe mit integrierter zentraler Synchronisiereinrichtung.
- Fig. 2: zeigt den Antriebsstrang der Fig. 1a in Verbindung mit Drehzahlsensoren, einer elektronischen Steuereinheit und einer Hydraulikeinheit zur Ansteuerung der Doppelkupplung und der zentralen Synchronisiereinrichtung.
- Fig. 3: zeigt einen vergrößerten, Details der zentralen Synchronisiereinrichtung zeigenden Ausschnitt der Anordnung gemäß Fig. 1a.
- Fig. 4: zeigt eine Ausführungsvariante der zentralen Synchronisiereinrichtung in einer Darstellung entsprechend Fig. 3.
- Fig. 5: zeigt eine weitere Ausführungsvariante der zentralen Synchronisiereinrichtung in einer Darstellung entsprechend Fig. 3.
- Fig. 6: zeigt eine schematische Axialansicht eines Planetenradsatzes der zentralen Synchronisiereinrichtung.

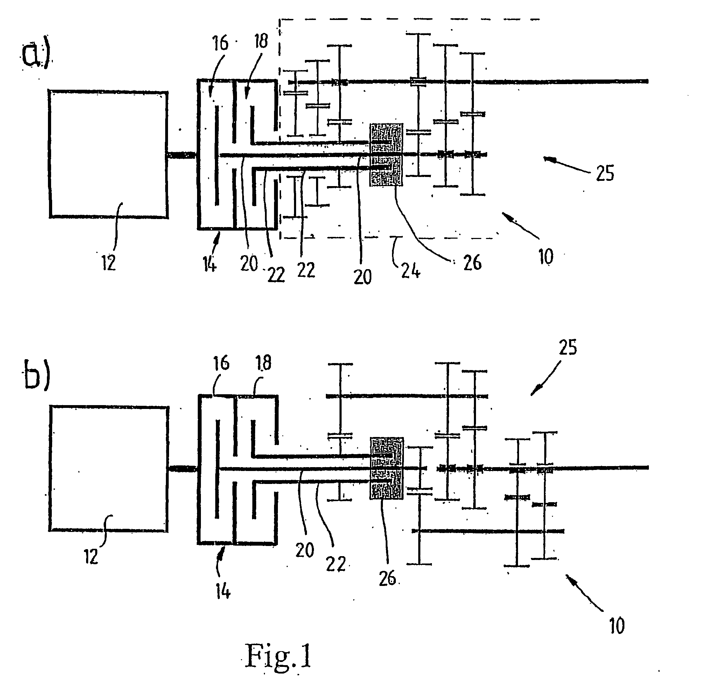

Die Ausführungsbeispiele der Fig. 1 bis 5 zeigen jeweils einen Antriebsstrang bzw. einen Ausschnitt des Doppelkupplungsgetriebes des Antriebsstrangs, und zwar in einer mehr schematischen oder symbolhaften Darstellung des Getriebes. Das Getriebe weist zwei koaxial verlaufende Getriebeeingangswellen auf. Einer ersten der Getriebeeingangswellen sind die gradzahligen Getriebegänge (die "ersten" Getriebegänge) zugeordnet und einer zweiten der Getriebeeingangswelle sind die ungradzahligen (die "zweiten" Getriebegänge) Getriebegänge zugeordnet, oder umgekehrt. Einer der Getriebeeingangswellen ist ferner der Rückwärtsgang zugeordnet. Eine Drehrichtungsumkehr für den Rückwärtsgang bewirkende Zahnradzüge sind in den Getriebedarstellungen weggelassen, da hier ohne Interesse.

Der Antriebsstrang 10 der Fig. 1a und 1b umfasst eine Antriebseinheit 12, beispielsweise einen Verbrennungsmotor bzw. eine Brennkraftmaschine. Abtriebsseitig der Antriebseinheit ist eine Doppelkupplung 14 vorgesehen, die beispielsweise als nasslaufende Lamellen-Kupplungseinrichtung ausgeführt sein kann, beispielsweise entsprechend Konstruktionen der Anmelderin (vgl. beispielsweise die eine nasslaufende Doppel-Lamellen-Kupplungseinrichtung in mehreren Ausführungsvarianten zeigende DE 100 04 179 A1). Bei der Doppelkupplung 14 kann es sich aber auch um eine trockenlaufende Doppelkupplung der Reibscheibenbauart handeln (vgl. beispielsweise EP 0 931 951 A1). Die Doppelkupplung dient zur Momentenübertragung zwischen der Antriebseinheit und einem der Doppelkupplung zugeordneten Getriebe 25 in Bezug auf zwei koaxial angeordnete Getriebeeingangswellen 20 und 22.

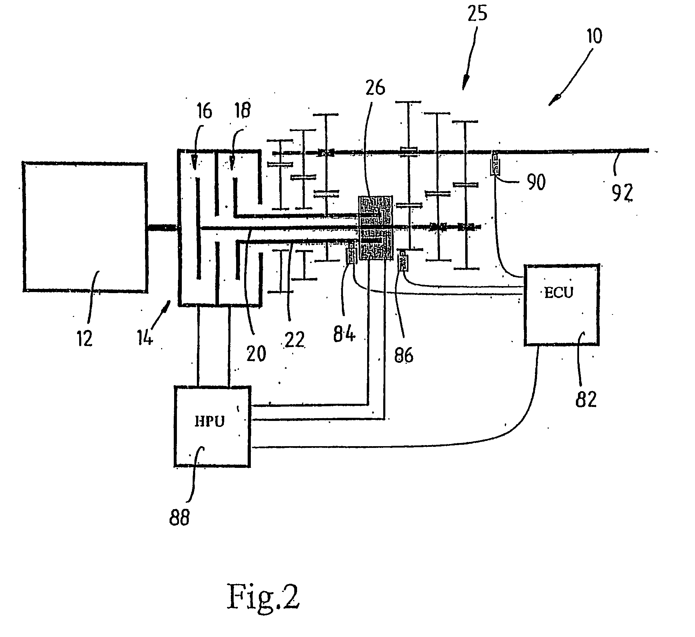

Die Doppelkupplung weist eine erste Kupplungsanordnung 16 und eine zweite Kupplungsanordnung 18 auf. Mittels der ersten Kupplungsanordnung 16 ist eine erste, radial innere Getriebeeingangswelle 20 mit einer Eingangsseite der Doppelkupplung 14 und damit mit einer Abtriebswelle der Antriebseinheit reibschlüssig in Drehmomentübertragungsverbindung bringbar. Mittels der zweiten Kupplungsanordnung 18 ist eine zweite, radial äußere und dementsprechend als Hohlwelle ausgeführte Getriebeeingangswelle 22 mit der Eingangsseite der Doppelkupplung 14 und damit mit einer Abtriebswelle der Antriebseinheit reibschlüssig in Drehmomentübertragungsverbindung bringbar. Die Getriebeeingangswellen erstrecken sich jeweils in ein in Fig. 1a gestrichelt angedeutetes Getriebegehäuse 24. In einem Endbereich der radial äußeren Hohlwelle 22 ist innerhalb des Getriebegehäuses 24 eine in den Fig. 1 und 2 nur als "Blackbox" dargestellte zentrale Synchronisiereinrichtung 26 angeordnet und mit den beiden Getriebeeingangswellen verkoppelt. Die zentrale Synchronisiereinrichtung 26 weist zwei Planetenradsätze auf, die sowohl beim Schalten von einem der ersten Getriebeeingangswelle zugeordneten Ausgangs-Getriebegang zu einem der zweiten Getriebeeingangswelle zugeordneten Ziel-Getriebegang als auch beim Schalten von einem der zweiten Getriebeeingangswelle zugeordneten Ausgangs-Getriebegang zu einem der ersten Getriebeeingangswelle zugeordneten Ziel-Getriebegang eine Synchronisation der Drehzahlen der Getriebeeingangswellen im Sinne eines Abbremsens bzw. Beschleunigens der dem jeweiligen Zielgang zugeordneten Getriebeeingangswelle ermöglicht.

Die erfindungsgemäße Zentral-Synchronisiereinrichtung 26 kommt - zumindest nach einer bevorzugten Realisierung - ohne zusätzliche Wellen und Lagerstellen aus. Sie baut kompakt und kann mit einer einfachen Ansteuerung angesteuert werden. Die beiden Planetenradsätze bestehen jeweils aus Sonnenrad, Planetenrädern auf einem Planetenträger und einem Hohl- oder Ringrad. Das Sonnenrad, der Planetenträger und das Hohlrad besitzen alle dieselbe Drehachse, welche durch das Zentrum des Sonnenrads geht und mit der gemeinsamen Drehachse der beiden zueinander koaxialen Getriebeeingangswellen zusammenfällt.

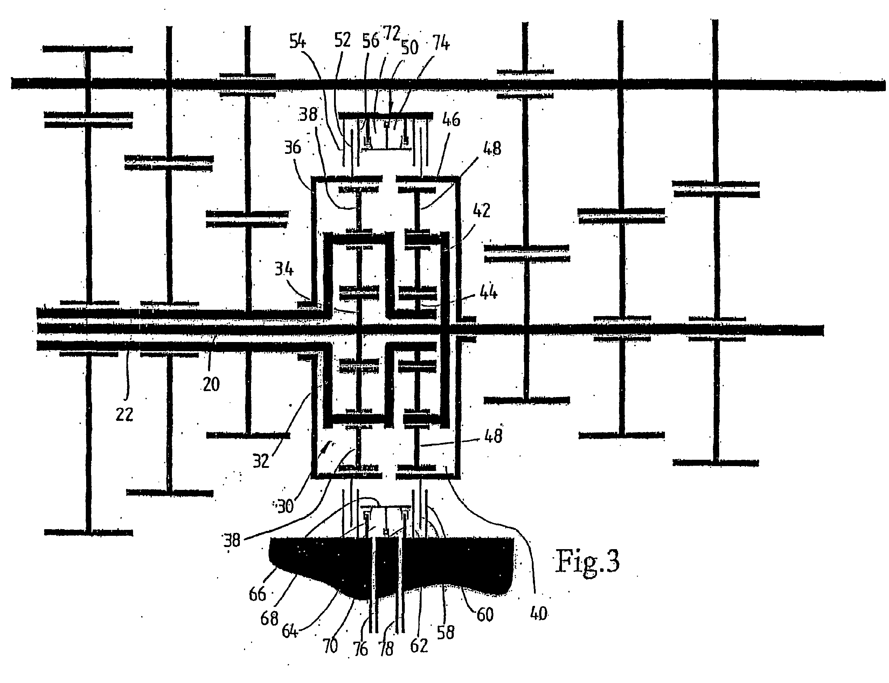

Wie in Fig. 3 erkennbar, kann die Ausbildung der zentralen Synchronisiereinrichtung 26 wie folgt sein. In einem ersten Planetenradsatz 30 ist die äußere (zweite) Getriebeeingangswelle (Hohlwelle 22) mit dem Planetenradträger 32 gekoppelt. Die innere (erste) Getriebeeingangswelle 20 trägt das Sonnenrad 34. Der Planetenradträger 32 ist mit der zweiten Getriebeeingangswelle 22 und das Sonnenrad 34 ist mit der ersten Getriebeeingangswelle 20 drehfest verbunden. Mit dem Sonnenrad 34 und einem Hohl- oder Ringrad 36 kämmen mehrere Planetenräder 38.

In entsprechender Weise ist der zweite Planetenradsatz 40 realisiert, allerdings mit einer anderen Zuordnung von Planetenradträger und Sonnenrad zu den Getriebeeingangswellen. Hier trägt die radial äußere (zweite) Getriebeeingangswelle (Hohlwelle 22) das Sonnenrad 44, während der Planetenradträger 42 mit der inneren (ersten) Getriebeeingangswelle 20 gekoppelt ist. Das Sonnenrad 44 und der Planetenradträger 42 sind mit der jeweiligen Getriebeeingangswelle drehfest verbunden. Mit dem Sonnenrad 44 und einem Hohl- oder Ringrad 46 kämmen mehrere Planetenräder 48.

Für beide Planetenradsätze 30 und 40 sind die Hohlräder 36 und 46 frei drehbar, aber mittels einer zugehörigen, sich im Getriebe bzw. am Getriebegehäuse abstützenden Bremseinrichtung 50 abbremsbar. Entsprechend der Abbremsung des jeweiligen Hohlrads wälzen sich die Planetenräder auf der Innenverzahnung des jeweiligen Hohlrads ab, und es kommt zu einer Momentenübertragung zwischen dem Planetenradträger und dem Sonnenrad und damit zwischen den beiden Getriebeeingangswellen, die gleichen Drehsinn aufweisen. Je nach Situation erfolgt eine Übersetzung ins Schnellere oder ins Langsamere, wie im Folgenden noch näher erläutert wird.

Können die Hohlräder frei drehen, sind die Drehzahlen der Getriebeeingangswellen, von Schleppmomenten abgesehen, völlig unabhängig voneinander und beeinflussen sich nicht. Wird eines der Hohlräder durch die jeweilige Bremseinrichtung abgebremst, so bewirkt dies eine Abbremsung des Planetenträgers gegenüber dem Sonnenrad bzw. eine Beschleunigung des Sonnenrads gegenüber dem Planetenträger. Mittels des Abbremsens des betreffenden Hohlrads kann sowohl die innere Getriebeeingangswelle 20 als auch die äußere Getriebeeingangswelle (Hohlwelle) 22 abgebremst oder beschleunigt werden. Ist, wie oben angegeben und bevorzugt, die Zuordnung der Getriebegänge zu den Getriebeeingangswellen derart, dass die geraden Vorwärtsgänge mit der einen Getriebeeingangswelle und die ungeraden Vorwärtsgänge mit der anderen Getriebeeingangswelle gekoppelt sind, so kann bei Schaltungen zwischen aufeinander folgenden Gängen oder - allgemeiner - beim Schalten zwischen einem der einen Getriebeeingangswelle zugeordneten Ausgangs-Vorwärtsgang und einem der anderen Getriebeeingangswelle zugeordneten Ziel-Vorwärtsgang die jeweils drehmomentübertragende, dem Ausgangsgang zugeordnete Getriebeeingangswelle vermittels eines der Planetenradsätze die andere Getriebeeingangswelle synchronisieren.

Fig. 3 zeigt schematisch oder symbolhaft eine bevorzugte Ausgestaltung der Abbremseinrichtung 50, die beiden Hohlrädern 36 und 46 gemeinsam zugeordnet ist. Die Abbrernseinrichtung weist wenigstens eine von dem Hohlrad 36 drehfest getragene, nach radial außen vorstehende Reiblamelle 52 auf, die axial zwischen zwei gehäusefesten, sich am Getriebegehäuse gegen Drehung abstützenden Reiblamellen 54 und 56 angeordnet ist. Die gehäusefeste Reiblamelle 54 ist ferner in Richtung zur Antriebseinheit axial abgestützt.

In entsprechender Weise trägt das Hohlrad 46 drehfest wenigstens eine Reiblamelle 58, die axial zwischen zwei gehäusefesten, sich gegen Drehung am Getriebegehäuse abstützenden Reiblamellen 60 und 62 angeordnet ist. Die Reiblamelle 60 ist ferner axial in Richtung weg von der Antriebseinheit am Getriebegehäuse abgestützt. Den beiden Hohlrädern 36 und 46 können auch jeweils Lamellenpakete mit einer größeren Anzahl von Reiblamellen zugeordnet sein. Die Reiblamellen können derart ausgeführt sein, dass sich Paarungen aus reibbelaglosen und reibbelagtragenden Lamellen ergeben.

Zwischen den Lamellen 52, 54 und 56 einerseits und den Lamellen 58, 60 und 62 andererseits ist ein doppelt wirkendes Zylinder-Ringkolben-Gerät 64 angeordnet, das einen Ringkolben 66 von im Querschnitt näherungsweise T-förmiger Gestalt aufweist. Der Ringkolben 66 begrenzt mit seinem sich axial erstreckenden Abschnitt und einem sich radial erstreckenden Abschnitt sowie mit getriebefesten, nach radial innen vorstehenden Wandabschnitten 68 und 70 zwei ringförmige hydraulische Nehmerzylinderkammern 72 und 74, in die hydraulisches Druckmedium über eine jeweilige Zuleitung 76 bzw. 78 zuführbar ist, um entweder die Lamellen-Bremsanordnung 52, 54, 56 oder die Lamellen-Bremsanordnung 58, 60, 62 in reibschlüssigen Abbremseingriff zu bringen, so dass entsprechend dem in der jeweiligen hydraulischen Nehmerzylinderkammer herrschenden Druck eine Abbremsung des Planetenträgers 36 oder des Planetenradträgers 46 erfolgt. Zu den hydraulischen Nehmerzylinderkammern sei noch erwähnt, dass in Fig. 3 symbolhaft Dichtungen angedeutet sind, die zwischen dem Ringkolben 66 und den Wandabschnitten 68 und 70 bzw. einem Getriebegehäuseabschnitt wirken und so die Nehmerzylinderkammern 72, 74 gegeneinander und nach außen abdichten.

Die durch die zentrale Synchronisiereinrichtung 26 gegebenen Synchronisationsmöglichkeiten können beispielhaft wie folgt näher erläutert werden. Soll z. B. eine Einfach-Rückschaltung (beispielsweise vom 3. Gang in den 2. Gang) erfolgen, bei der der Ausgangsgang auf der radial äußeren (zweiten) Getriebeeingangswelle (Hohlwelle 22) liegt und der Zielgang auf der radial inneren (ersten) Getriebeeingangswelle 20 liegt, so muss die innere Getriebeeingangswelle 20 in der Regel hochbeschleunigt werden. Hierzu wird das Hohlrad 36 des ersten Planetenradsatzes 30 mittels der Lamellenbremse 52, 54, 56 abgebremst. Das Sonnenrad 34 dieses Planetenradsatzes ist mit der inneren Getriebeeingangswelle 20 gekoppelt, und aus der Abbremsung resultiert eine Übersetzung ins Schnellere vom Planetenradträger 32 zum Sonnenrad 34, so dass die innere Welle 20 beschleunigt wird.

Soll z. B. eine Einfach-Hochschaltung (beispielsweise vom 2. Gang in den 3. Gang) erfolgen, bei der der Ausgangsgang auf der inneren Getriebeeingangswelle 20 und der Zielgang auf der äußeren Getriebeeingangswelle 22 liegt, so muss in der Regel die dem Zielgang zugeordnete äußere Getriebeeingangswelle 22 abgebremst werden. Dies kann wiederum durch Betätigung der Lamellenbremse 52, 54, 56 mittels des Zylinder-Ringkolben-Geräts 64 erfolgen. Über das mit der inneren Getriebeeingangswelle 20 gekoppelte Sonnenrad 34 erfolgt unter Vermittlung des abgebremsten Hohlrads 36 eine Untersetzung ins Langsamere zum Planetenradträger 36, der mit der radial äußeren Getriebeeingangswelle 22 gekoppelt ist, so dass die äußere Getriebeeingangswelle 22 abgebremst wird.

Soll z. B. eine Einfach-Rückschaltung (beispielsweise vom 2. Gang in den 1. Gang) erfolgen, bei der von einem auf der radial inneren Getriebeeingangswelle 20 liegenden Ausgangsgang zu einem auf der radial äußeren Getriebeeingangswelle 22 liegenden Zielgang geschaltet werden soll, so muss die äußere, dem Zielgang zugeordnete Getriebeeingangswelle 22 in der Regel beschleunigt werden. Dies kann durch Betätigung der Lamellenbremse 58, 60, 62 mittels des Zylinder-Ringkolben-Geräts 64 erfolgen. Durch Abbremsen des dem zweiten Planetenradsatz 40 zugehörigen Hohlrads 46 erfolgt eine Übersetzung ins Schnellere vom mit der inneren Getriebeeingangswelle 20 gekoppelten Planetenradträger 42 zum mit der äußeren Getriebeeingangswelle 22 gekoppelten Sonnenrad 44, so dass die äußere Getriebeeingangswelle 22 beschleunigt wird.

Soll z. B. eine Einfach-Hochschaltung (beispielsweise vom 1. Gang in den 2. Gang) von einem auf der äußeren Getriebeeingangswelle 22 liegenden Ausgangsgang zu einem auf der inneren Getriebeeingangswelle 20 liegenden Zielgang erfolgen, so muss die innere Getriebeeingangswelle 20 in der Regel abgebremst werden. Dies kann wiederum durch Betätigung der Lamellenbremse 58, 60, 62 erfolgen. Die Abbremsung des Hohlrads 46 bewirkt eine Übersetzung ins Langsamere vom mit der äußeren Getriebeeingangswelle 22 gekoppelten Sonnenrad 44 zum mit der inneren Getriebeeingangswelle 20 gekoppelten Planetenradträger 42, so dass die innere Getriebeeingangswelle 20 abgebremst wird.

Die vorstehend angegebenen Beispiele machen deutlich, dass mittels der beiden Planetenradsätze 30 und 40 jede Schaltung, bei der von der einen zu der anderen Getriebeeingangswelle geschaltet wird, synchronisierbar ist oder eine Synchronisation zumindest unterstützbar ist.

Wie in Fig. 3 zu erkennen, können die beiden Planetenradsätze 30 und 40 direkt axial nebeneinander am im Getriebegehäuse liegenden Ende der äußeren Getriebeeingangswelle 22 angeordnet sein. Eine derartige Anordnung ist dahingehend vorteilhaft, als dass Bauraum gespart wird und eine einfache Verkopplung mit den Getriebeeingangswellen möglich ist. Es sitzt bevorzugt derjenige Planetenradsatz, nämlich der Planetenradsatz 40, axial neben dem getriebeinternen Ende der äußeren Getriebeeingangswelle 22, dessen Sonnenrad (Sonnenrad 44) mit der äußeren Welle 22 drehfest gekoppelt ist.

Fig. 3 zeigt ein Ausführungsbeispiel, bei dem ein außen liegender, axial längerer und zur Doppelkupplung führender Abschnitt der äußeren Getriebeeingangswelle 22 und ein innerer, axial kürzerer und das Sonnenrad 44 tragender Abschnitt der äußeren Getriebeeingangswelle 22 über den Planetenradträger 32 miteinander zur gemeinsamen Drehung gekoppelt sind.

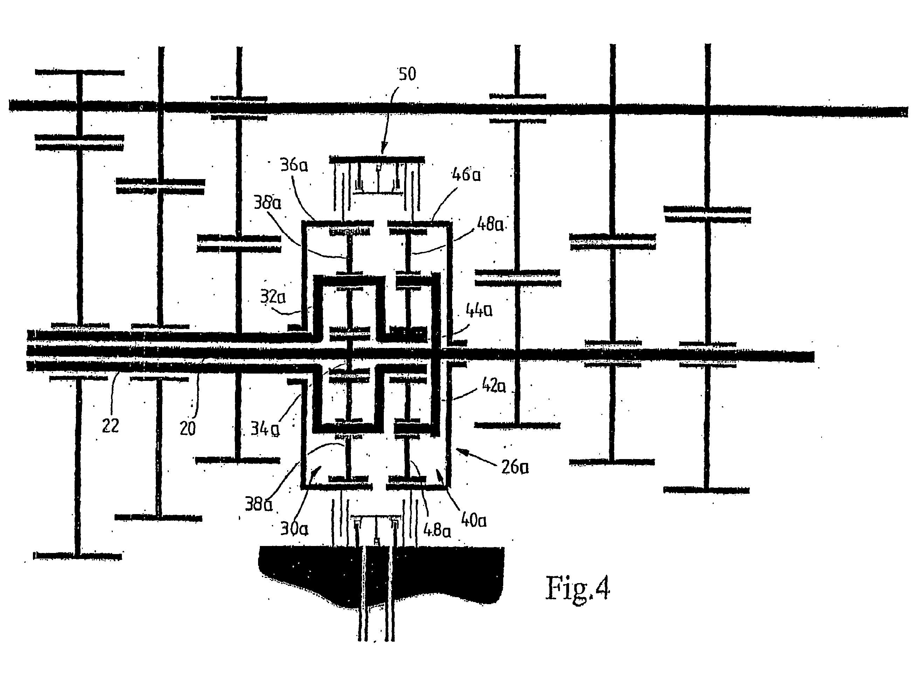

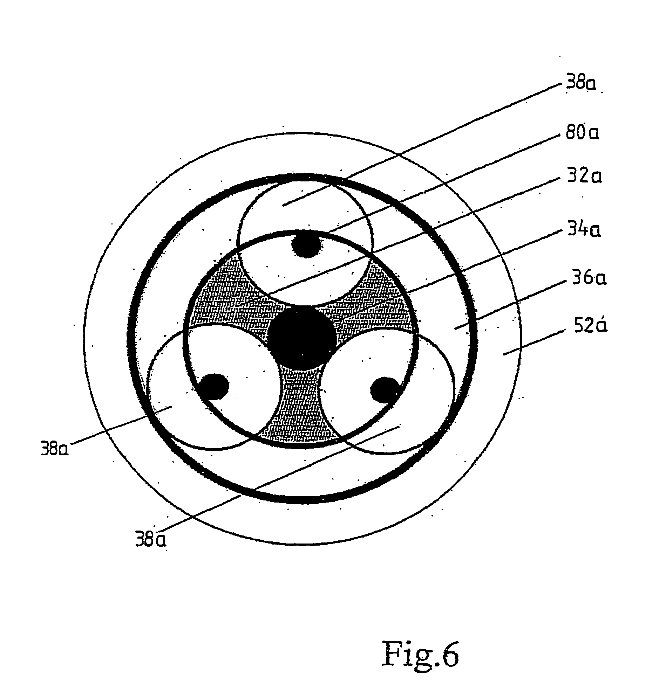

Eine andere, in Fig. 4 veranschaulichte Möglichkeit ist, dass die beiden Planetenradsätze 30a, 40a dermaßen miteinander gekoppelt sind, dass das Sonnenrad 44a des von der Antriebseinheit ferneren Planetenradsatzes 40a direkt mit dem Planetenradträger 32a des anderen Planetenradsatzes 30a verbunden ist. Genauer, das in der Zeichnung weiter rechts liegende Sonnenrad 44a ist direkt am Planetenradträger 32a angebracht oder einteilig mit diesem ausgeführt. Ein weiterer Unterschied zum Ausführungsbeispiel der Fig. 4 ist, dass die Sonnenräder 34a und 44a einen kleineren Durchmesser als die Sonnenräder 34 und 44 aufweisen. Die beiden Sonnenräder der jeweiligen Synchronisiereinrichtung 26 bzw. 26a weisen aber jeweils den gleichen Durchmesser auf. Gleiches gilt für die Planetenräder 38, 48 bzw. 38a, 48a und die Hohlräder 36, 46 bzw. 36a, 46a. Dies ermöglicht, viele Gleichteile zu verwenden. Sind die Durchmesser der Hohlräder gleich, können überdies identisch ausgebildete Abbrems-Lamellenpakete für die beiden jeweiligen Planetenradsätze bzw. deren Hohlräder verwendet werden. Die Planetenradträger sind vorzugsweise als Scheiben ausgebildet, von denen Stegwellen senkrecht vorstehen, auf denen jeweils die Planetenräder drehbar gelagert sind (vgl. Fig. 6).

Betreffend die Bremseinrichtung 50 sollte noch erwähnt werden, dass als "Lamellenbremsen" für die beiden Hohlräder Lamellenkupplungen bzw. Lamellenbremsen der aus Automatgetrieben prinzipiell bekannten Art verwendet werden können, die, wie erwähnt, gegen das Getriebegehäuse abgebremst werden. Anstelle eines doppelt wirkenden Zylinder-Ringkolben-Geräts, welches entweder in der einen axialen Richtung auf die eine Lamellenbremse oder in der anderen axialen Richtung auf die andere Lamellenbremse wirkt und damit entweder das eine oder das andere Hohlrad abbremst, können auch andere Aktuatoren, beispielsweise wenigstens zwei einfach wirkende (und zwar in verschiedene axiale Richtungen wirkende) Zylinder-Kolben-Geräte oder elektromechanische Aktuatoren verwendet werden.

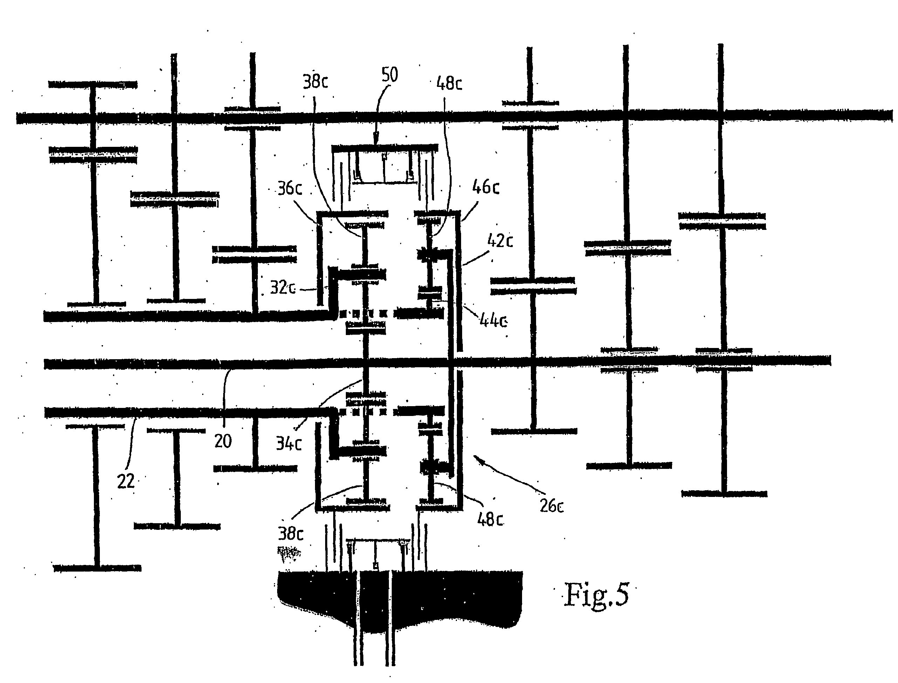

Fig. 5 zeigt einen etwas anderen Aufbau, bei welchem die Sonnenräder 34c und 44c und, bei Hohlrädern 36c und 46c gleichen Durchmessers, dementsprechend die Planetenräder 38c und 48c verschiedene Durchmesser aufweisen. Der mit der äußeren Getriebeeingangswelle 22 gekoppelte und vorzugsweise teilweise von dieser gebildete Planetenradträger 32c trägt Planetenräder 38c, die durch eine jeweilige Öffnung oder Aussparung der äußeren Getriebeeingangswelle hindurchgreifen, um mit dem radial innerhalb der äußeren Getriebeeingangswelle 22 angeordneten, von der inneren Getriebeeingangswelle 20 drehfest getragenen Sonnenrad 34c zu kämmen. Man könnte daran denken, die radial vorstehenden, die Stegwellen der Planetenräder 38c tragenden Abschnitte des Planetenradträgers 32 von aus dem Umfang der äußeren Getriebeeingangswelle 22 gewissermaßen nach radial außen gebogenen lappenartigen Abschnitten oder Flanschsegmenten zu bilden. Das andere Sonnenrad 44c sitzt direkt auf dem Endabschnitt der äußeren Getriebeeingangswelle 22.

Fig. 6 zeigt eine symbolhafte Axialansicht auf den zur Antriebseinheit axial näheren Planetenradsatz, beispielsweise den Planetenradsatz 30a der Fig. 4. Zu erkennen ist das sich im Zentrum befindende Sonnenrad 34a, das auf der inneren Getriebeeingangswelle 20 sitzt. Mit dem Sonnenrad 34a kämmen drei Planetenräder 38a, deren Stegwellen 80a auf dem Planetenträger 32ä senkrecht stehen und mit diesem fest verbunden sind. Der Planetenträger 32a ist wiederum mit der äußeren Getriebeeingangswelle 22 drehfest verbunden. Das Hohlrad 36a dient als Lamellenträger für wenigstens eine radial hiervon vorstehende Lamelle 52a. Die wenigstens eine Lamelle 52a sitzt auf dem Außenumfang des Hohlrads 36a und bildet mit zugehörigen getriebefesten Lamellen das Lamellenpaket einer vorzugsweise nasslaufenden Lamellenbremse. Durch den relativ großen Durchmesser der Lamellen im Vergleich zu Reibflächen von konventionellen Synchronisiereinrichtungen, wie z. B. Sperrsynchronisierungen, können wesentlich größere Synchronisiermomente realisiert werden. Man kann durchaus auf Sperrsynchronisierungen und dergleichen ganz verzichten, wodurch das erfindungsgemäße Doppelkupplungsgetriebe wesentlich kürzer bauen kann. Eine andere Möglichkeit ist, die erfindungsgemäße Planetenradsatz-Synchronisierung, vorzugsweise Doppel-Planetenradsatz-Synchronisierung, unterstützend zu einfachen Synchronisierungen vorzusehen.

Eine bevorzugte Möglichkeit ist, die relevanten Bauteile, wie z. B. die Zahnräder der Planetenradsätze, kostengünstig aus Sintermaterial herzustellen. Beispielsweise können die Zahnräder aus Sintermaterial gestanzt werden. Es wird in diesem Zusammenahng an dem Fachmann verfügbares Sintermaterial gedacht, welches Synchronisierungsmomente (beispielsweise bis ca. 20 Nm) und die auftretenden Temperaturen im Getriebe (beispielsweise bis etwa 150 °C) ohne Probleme verkraftet.

Die Bremseinrichtung der Synchronisiereinrichtung 26 (bzw. 26a bzw. 26b bzw. 26c) kann vorteilhaft durch eine elektronische Steuereinheit 82 auf Grundlage von Sensormessergebnissen angesteuert werden, die die Drehzahlen der beiden Getriebeeingangswellen 20 und 22 repräsentieren. In Fig. 2 sind entsprechende Drehzahlsensoren symbolhaft dargestellt und mit 84 und 86 bezeichnet. Handelt es sich bei der Bremseinrichtung um eine hydraulische Bremseinrichung, wie dies bei den Ausführungsbeispielen der Fig. 3 bis 5 der Fall ist, so kann die Ansteuerung der Bremseinrichtung bzw. des wenigstens einen hydraulischen Zylinder-Kolben-Geräts derselben unter Vermittlung einer Hydraulikeinheit 88 erfolgen, die im Falle von hydraulisch betätigbaren Kupplungsanordnungen 16 und 18 der Doppelkupplung 14 auch die entsprechenden hydraulischen Nehmerzylinder der Doppelkupplung 14 ansteuern kann.

Gemäß dem besonders bevorzugten Ausführungsbeispiel der Fig. 2 dient die Hydraulikeinheit 88 sowohl zur Betätigung der Doppelkupplung 14 als auch zur Betätigung der zentralen Synchronisiereinrichtung 26. Die die Drehzahlen an den Getriebeeingangswellen bzw. an mit diesen drehfest verbundenen Zahnrädern abgreifenden Sensoren 84 und 86, sowie bevorzugt ein zusätzlicher Drehzahlsensor 90, der die momentane Drehzahl der Getriebeabtriebswelle 92 abgreift, stellen der elektronischen Steuereinheit 82 (ECU; Electronic Control Unit) Drehzahlsignale bereit, auf deren Grundlage die Steuereinheit 82 die erforderliche Synchrondrehzahl oder mit dieser korrespondierende Werte bestimmt und dementsprechend die hydraulische Steuereinheit 88 (HPU; Hydraulic Power Unit) ansteuert, um die erforderliche Synchrondrehzahl einzustellen. Bevorzugt können elektronische Regelkreise realisiert sein, die die jeweils benötigte Synchrondrehzahl unter Vermittlung der Hydraulikeinheit 88 und der Bremseinrichtung der Synchronisiereinrichtung 26 einregeln.

## Patentansprüche

1. Doppelkupplungsgetriebe (25) für ein Kraftfahrzeug, umfassend:
- eine erste Getriebeeingangswelle (20), der wenigstens ein erster Getriebegang zugeordnet ist, und eine zweite Getriebeeingangswelle (22), der wenigstens ein zweiter Getriebegang zugeordnet ist, wobei von den Getriebeeingangswellen, die zueinander im Wesentlichen gleichachsig verlaufen, eine als Hohlwelle ausgeführte äußere Getriebeeingangswelle (22) eine innere Getriebeeingangswelle (20) umschließt und
- eine getriebeinterne Synchronisiereinrichtung (26), die dafür ausgelegt ist, eine Synchronisation von den Getriebegängen zugeordneten Drehzahlen beim Schalten von einem einer der Getriebeeingangswellen zugeordneten. Gang zu einem der anderen der Getriebeingangswellen zugeordneten Gang im Sinne eines Abbremsens bzw. eines Beschleunigens zu ermöglichen oder zumindest zu unterstützen,
**dadurch gekennzeichnet, dass** die Synchronisiereinrichtung (26) wenigstens zwei Planetenradsätze (30, 40) und eine zugeordnete Bremseinrichtung (50) aufweist, wobei die wenigstens zwei Planetenradsätze (30, 40) axial versetzt zueinander und im Wesentlichen gleichachsig zu und in Wirkverbindung mit den Getriebeeingangswellen (20, 22) angeordnet sind, und dass von den Sonnenrädern, den Planetenradträgern und den Hohlrädern der wenigstens zwei Planetenradsätze (30, 40) je eine erste Komponente (34; 42) mit der ersten Getriebeeingangswelle (20) im Sinne einer.Drehmitnahme gekoppelt oder koppelbar ist, eine zweite Komponente (32; 44) mit der zweiten Getriebeeingangswelle (22) im Sinne einer Drehmitnahme gekoppelt oder koppelbar ist und eine dritte Komponente (36; 46) mittels der sich direkt oder indirekt an einem Getriebegehäuse abstützenden oder abstützbaren Bremseinrichtung (50) der Synchronisiereinrichtung (26) abbremsbar ist.

2. Doppelkupplungsgetriebe nach Anspruch 1, **dadurch gekennzeichnet, dass** die erste Komponente fest (34, 42) mit der ersten Getriebeeingangswelle (20) verbunden oder von dieser gebildet oder mit dieser einteilig ist und dass die zweite Komponente (32; 44) fest mit der zweiten Getriebeeingangswelle (22) verbunden oder von dieser gebildet oder mit dieser einteilig ist.

3. Doppelkupplungsgetriebe nach Anspruch 1 oder 2, **dadurch gekennzeichnet, dass** das Hohlrad (36; 46) als dritte Komponente dient und mittels der Bremseinrichtung (50) abbremsbar ist.

4. Doppelkupplungsgetriebe nach einem der Ansprüche 1 bis 3, **dadurch gekennzeichnet, dass** die Synchronisiereinrichtung (26) zwei axial gegeneinander versetzte Planetenradsätze (30, 40) aufweist, die derart den Getriebeeingangswellen (20, 22) zugeordnet sind, dass i) sowohl beim Hochschalten als auch beim Herunterschalten von einem ersten zu einem zweiten Gang sowie ii) sowohl beim Hochschalten als auch beim Herunterschalten von einem zweiten zu einem ersten Gang eine Synchronisation im Sinne eines Abbremsens bzw. eines Beschleunigens möglich ist.

5. Doppelkupplunggetriebe nach einem der Ansprüche 1 bis 4, **dadurch gekennzeichnet, dass** der Planetenradsatz oder einer (30) der beiden Planetenradsätze derart den Getriebeeingangswellen zugeordnet ist, dass sein Sonnenrad (34) mit der inneren Getriebeeingangswelle (20) im Sinne der Drehmitnahme gekoppelt oder koppelbar ist und sein Planetenradträger (32) mit der äußeren Getriebeeingangswelle (22) im Sinne der Drehmitnahme gekoppelt oder koppelbar ist.

6. Doppelkupplunggetriebe nach einem der Ansprüche 1 bis 5, **dadurch gekennzeichnet, dass** der Planetenradsatz oder einer (40) der beiden Planetenradsätze derart den Getriebeeingangswellen zugeordnet ist, dass sein Planetenradträger (42) mit der inneren Getriebeeingangswelle (20) im Sinne der Drehmitnahme gekoppelt oder koppelbar ist und sein Sonnenrad mit der äußeren Getriebeeingangswelle (22) im Sinne der Drehmitnahme gekoppelt oder koppelbar ist.

7. Doppelkupplungsgetriebe nach Anspruch 4 sowie nach Anspruch 5 und Anspruch 6, **dadurch gekennzeichnet, dass** das Sonnenrad (44a) des einen Planetenradsatzes (40a) und der Planetenradträger (32a) des anderen Planetenradsatzes (30a) fest zur gemeinsamen Drehung miteinander verbunden sind und vorzugsweise Teile oder Abschnitte eines integralen oder einteiligen Bauteils sind.

8. Doppelkupplungsgetriebe nach einem der vorhergehenden Ansprüche, jedenfalls nach Anspruch 4, **dadurch gekennzeichnet, dass** die Planetenradsätze (30, 40) in einem Axialbereich der Getriebeeingangswellen innerhalb des Getriebegehäuses (24) angeordnete sind, in dem die äußere Getriebeeingangswelle (22) endet.

9. Doppelkupplungsgetriebe nach Anspruch 6 und nach Anspruch 8, **dadurch gekennzeichnet, dass** der Planetenradträger (42), der mit der inneren Getriebeeingangswelle (20) im Sinne der Drehmitnahme gekoppelt oder koppelbar ist, axial jenseits des Endes der äußeren Getriebeeingangswelle (22) angeordnet ist.

10. Doppelkupplungsgetriebe nach einem der Ansprüche 1 bis 9, **dadurch gekennzeichnet, dass** die äußere Getriebeeingangswelle (22) einen einem/dem Ende der äußeren Getriebeeingangswelle im Getriebegehäuse näheren oder dieses Ende aufweisenden Abschnitt und einen diesem Ende ferneren Abschnitt aufweist, die über einen Planetenradträger (32; 32a) drehfest miteinander gekoppelt sind.

11. Doppelkupplungsgetriebe nach einem der Ansprüche 1 bis 9, **dadurch gekennzeichnet, dass** die äußere Getriebeeingangswelle (22) wenigstens eine Öffnung aufweist, durch welche ein Planetenrad (38c), das von einem mit der äußeren Getriebeeingangswelle (22) im Sinne der Drehmitnahme gekoppelten oder koppelbaren Planetenradträger (32c) getragen ist, zu einem mit der inneren Getriebeeingangswelle (20) im Sinne der Drehmitnahme gekoppelten oder koppelbaren Sonnenrad (34c) durchgreift.

12. Doppel kupplungsgetriebe nach einem der vorhergehenden Ansprüche, jedenfalls nach Anspruch 4, **dadurch gekennzeichnet, dass** die beiden Planetenradsätze (30, 40; 30a, 40a) jeweils Sonnenräder gleichen Durchmessers oder/und gleicher Zähnezahl aufweisen oder/und Planetenräder gleichen Durchmessers oder/und gleicher Zähnezahl aufweisen oder/und Hohlräder gleichen Durchmessers oder/und gleicher Zähnezahl aufweisen.

13. Doppelkupplungsgetriebe nach einem der vorhergehenden Ansprüche, **dadurch gekennzeichnet, dass** der Planetenradsatz drei Planetenräder aufweist bzw. dass die Planetenradsätze (30, 40) jeweils drei Planetenräder aufweisen.

14. Doppelkupplungsgetriebe nach einem der vorhergehenden Ansprüche, **dadurch gekennzeichnet, dass** der Planetenradträger bzw. wenigstens einer der Planetenradträger (32, 42) als Scheibe mit wenigstens einer hiervon vorstehenden Drehwelle (80a) für ein zugeordnetes Planetenrad ausgeführt ist.

15. Doppelkupplungsgetriebe nach einem der vorhergehenden Ansprüche, **dadurch gekennzeichnet, dass** die Bremseinrichtung (50) als vorzugsweise nasslaufende Lamellen-Bremseinrichtung ausgeführt ist.

16. Doppelkupplungsgetriebe nach Anspruch 15, **dadurch gekennzeichnet, dass** die Lamellen-Bremseinrichtung (50) aufweist:
- wenigstens einen, vorzugsweise hydraulichen Aktuatator (64),
- wenigstens eine mit dem (jeweiligen) Hohlrad (36; 46) in Drehmitnahmeverbindung stehende, vorzugsweise nach radial außen vom Hohlrad vorstehende Lamelle (52; 58) und
- wenigstens eine am Getriebegehäuse gegen Drehung abgestützte Lamelle (54, 56; 60, 62); wobei die wenigstens eine mit dem (jeweiligen) Hohlrad in Drehmitnahmeverbindung stehende Lamelle und die wenigstens eine am Getriebegehäuse gegen Drehung abgestützte Lamelle unter Vermittlung des wenigstens einen Aktuators in reibschlüssigen Eingriff bringbar sind, um das Hohlrad abzubremsen.

17. Doppelkupplungsgetriebe nach Anspruch 16, **dadurch gekennzeichnet, dass** der Aktuator als hydraulisch betätigbares Zylinder-Ringkolben-Gerät (64) ausgeführt ist.

18. Doppelkupplungsgetriebe nach Anspruch 4 sowie nach Anspruch 16 oder 17, **dadurch gekennzeichnet, dass** beiden Planetenradsätzen (30, 40) gemeinsam wenigstens ein Aktuator zugeordnet ist, der als doppelt-wirkendes Zylinder-Kolben-Gerät, vorzugsweise als doppelt-wirkendes Zylinder-Ringkolben-Gerät (64) ausgeführt ist, unter dessen Vermittlung wahlweise entweder das Hohlrad (36) des einen Planetenradsatzes (30) oder das Hohlrad (46) des anderen Planetenradsatzes (40) abbremsbar ist.

19. Doppelkupplungsgetriebe nach einem der vorhergehenden Ansprüche, **gekennzeichnet durch** eine Sensoranordnung (84, 86, 90) zum Erfassen von wenigstens zwei den Getriebegängen zugeordneten Drehzahlen und eine Steuer/Regel-Einrichtung (82), die die erfassten Drehzahlen angebende Signale von der Sensoranordnung empfängt und auf Grundlage der empfangenden Signale im Zusammenhang mit einem Schaltvorgang die Bremseinrichtung (50) bzw. wenigstens eine der Bremseinrichtungen ansteuert, um vermittels eines Abbremsens einer Drehzahl oder/und Beschleunigen einer Drehzahl zu synchronisieren oder eine Synchronisation zumindest zu unterstützen.

20. Kraftfahrzeug-Antriebsstrang, umfassend eine Antriebseinheit (12), ein Getriebe (25) nach einem der vorhergehenden Ansprüche und eine Doppelkupplung (14) zur Momentenübertragung zwischen der Antriebseinheit und dem Getriebe.

21. Synchronisiereinrichtung für ein Doppelkupplungsgetriebe (25) nach einem der vorhergehenden Ansprüche, umfassend wenigstens einen Planetenradsatz (30, 40) und eine zugeordnete Bremseinrichtung (50), wobei der Planetenradsatz mit seinem Sonnenrad (34; 44), seinem Planetenradträger (32; 42) und seinem Hohlrad (36; 46) im Wesentlichen gleichachsig zu den Getriebeeingangswellen (20, 22) angeordnet ist oder angeordnet werden kann, und wobei von dem Sonnenrad, dem Planetenradträger und dem Hohlrad eine erste Komponente (34; 42) mit der ersten Getriebeeingangswelle (20) im Sinne einer Drehmitnahme gekoppelt oder koppelbar ist, eine zweite Komponente (32; 44) mit der zweiten Getriebeeingangswelle (22) im Sinne einer Drehmitnahme gekoppelt oder koppelbar ist und eine dritte Komponente (36; 46) mittels der sich direkt oder indirekt an einem Getriebegehäuse abstützenden oder abstützbaren Bremseinrichtung (50) der Synchronisiereinrichtung (26) abbremsbar ist.

## Claims

1. Double clutch transmission (25) for a motor vehicle, comprising:
- a first transmission input shaft (20), to which is assigned at least one first gear, and a second transmission input shaft (22), to which is assigned at least one second gear, wherein of the transmission input shafts, which run substantially on the same axis as one another, an outer transmission input shaft (22) designed as a hollow shaft encloses an inner transmission input shaft (26) and
- a synchronisation device (26) inside the transmission, which is configured to enable or at least support synchronisation of the speeds assigned to gears during shifting from a gear assigned to one of the transmission input shafts to a gear assigned to the other transmission input shaft for the purposes of braking or acceleration,
**characterised in that** the synchronisation device (26) has at least two sets of planet wheels (30, 40) and an assigned braking device (50), wherein the at least two sets of planet wheels (30, 40) are arranged axially offset from one another and substantially on the same axis as and in active connection with the transmission input shafts (20, 22) and that in each case a first component (34; 42) out of the sun wheels, the planet wheel carriers and the hollow wheels of the at least two sets of planet wheels (30, 40) is coupled or able to be coupled to the first transmission input shaft (20) for the purposes of a rotary drive, a second component (32; 44) is coupled or able to be coupled to the second transmission input shaft (22) for the purposes of a rotary drive and a third component (36; 46) can be braked by means of the braking device (50) of the synchronisation device (26) supported or able to be supported directly or indirectly on a gear box.

2. Double clutch transmission according to claim 1, **characterised in that** the first component (34, 42) is rigidly connected to the first transmission input shaft (20) or is formed by it or in one piece with it and the second component (32; 44) is rigidly connected to the second transmission input shaft (22) or is formed by it or in one piece with it.

3. Double clutch transmission according to claim 1 or 2, **characterised in that** the hollow wheel (36; 46) acts as third component and can be braked by means of the braking device (50).

4. Double clutch transmission according to one of claims 1 to 3, **characterised in that** the synchronisation device (26) has two sets of planet wheels (30, 40) offset axially from one another, which are assigned to the transmission input shafts (20, 22) in such a way that i) both on shifting up and on shifting down from a first to a second gear and ii) both on shifting up and on shifting down from a second to a first gear synchronisation for the purposes of braking or acceleration is possible.

5. Double clutch transmission according to one of claims 1 to 4, **characterised in that** the set of planet wheels or one (30) of the two sets of planet wheels is assigned to the transmission input shafts in such a way that its sun wheel (34) is coupled or able to be coupled to the inner transmission input shaft (20) for the purposes of the rotary drive and its planet wheel carrier (32) is coupled or able to be coupled to the outer transmission input shaft (22) for the purposes of the rotary drive.

6. Double clutch transmission according to one of claims 1 to 5, **characterised in that** the set of planet wheels or one (40) of the two sets of planet wheels is assigned to the transmission input shafts in such a way that its planet wheel carrier (42) is coupled or able to be coupled to the inner transmission input shaft (20) for the purposes of the rotary drive and its sun wheel is coupled or able to be coupled to the outer transmission input shaft (22) for the purposes of the rotary drive.

7. Double clutch transmission according to claim 4 and also according to claim 5 and claim 6, **characterised in that** the sun wheel (44a) of one of the sets of planet wheels (40a) and the planet wheel carrier (32a) of the other set of planet wheels (30a) are rigidly connected to one another for joint rotation and are preferably parts or sections of an integral or one-piece component.

8. Double clutch transmission according to one of the preceding claims, in any case according to claim 4, **characterised in that** the sets of planet wheels (30, 40) are arranged in an axial area of the transmission input shafts inside the gear box (24) in which the outer transmission input shaft (22) ends.

9. Double clutch transmission according to claim 6 and according to claim 8, **characterised in that** the planet wheel carrier (42) which is coupled or able to be coupled to the inner transmission input shaft (20) for the purposes of the rotary drive is arranged axially on the far side of the end of the outer transmission input shaft (22).

10. Double clutch transmission according to one of claims 1 to 9, **characterised in that** the outer transmission input shaft (22) has a section nearer one/the end of the outer transmission input shaft in the gear box or comprising this end and a section further from this end, which are non-rotatably coupled to one another via a planet wheel carrier (32; 32a).

11. Double clutch transmission according to one of claims 1 to 9, **characterised in that** the outer transmission input shaft (22) has at least one orifice through which a planet wheel (38c), carried by a planet wheel carrier (32c) coupled or able to be coupled to the outer transmission input shaft (22) for the purposes of the rotary drive, reaches to a sun wheel (34c) coupled or able to be coupled to the inner transmission input shaft (20) for the purposes of the rotary drive.

12. Double clutch transmission according to one of the preceding claims, in any case according to claim 4, **characterised in that** the two sets of planet wheels (30, 40; 30a, 40a) have in each case sun wheels of equal diameter or/and an equal number of teeth or/and have planet wheels of equal diameter or/and an equal number of teeth or/and hollow wheels of equal diameter or/and an equal number of teeth.

13. Double clutch transmission according to one of the preceding claims, **characterised in that** the set of planet wheels has three planet wheels or the sets of planet wheels (30, 40) have three planet wheels in each case.

14. Double clutch transmission according to one of the preceding claims, **characterised in that** the planet wheel carrier or at least one of the planet wheel carriers (32, 42) is designed as a disc with at least one rotary shaft (80a) projecting from it for an assigned planet wheel.

15. Double clutch transmission according to one of the preceding claims, **characterised in that** the braking device (50) is designed as a preferably wet running multiple disc braking device.

16. Double clutch transmission according to claim 15, **characterised in that** the multiple disc braking device (50) has:
- at least one, preferably hydraulic, actuator (64)
- at least one disc (52; 58) in rotary drive connection with the (respective) hollow wheel (36; 46) and preferably projecting radially outwards from the hollow wheel and
- at least one disc (54, 56; 60, 62) supported against rotation on the gear box; wherein the at least one disc in rotary drive connection with the (respective) hollow wheel and the at least one disc supported against rotation on the gear box can be brought into friction locking engagement by means of the at least one actuator, in order to brake the hollow wheel.

17. Double clutch transmission according to claim 16, **characterised in that** the actuator is designed as a hydraulically actuatable cylindrical annular piston device (64).

18. Double clutch transmission according to claim 4 and also according to claim 16 or 17, **characterised in that** assigned to both sets of planet wheels (30, 40) jointly is at least one actuator designed as a dual-action cylindrical piston device, preferably as a dual-action annular piston device (64), by means of which optionally either the hollow wheel (36) of one of the sets of planet wheels (30) or the hollow wheel (46) of the other set of planet wheels (40) can be braked.

19. Double clutch transmission according to one of the preceding claims, **characterised by** a sensor arrangement (84, 86, 90) for detecting at least two speeds assigned to the gears and an open loop/closed loop control device (82) which receives from the sensor arrangement the signals citing the detected speeds and on the basis of the received signals in association with a shift operation actuates the braking device (50) or at least one of the braking devices, in order to synchronise or at least to support synchronisation by means of braking a speed or/and accelerating a speed.

20. Motor vehicle drive train, comprising a drive unit (12), a transmission (25) according to one of the preceding claims and a double clutch (14) for transmitting moments between the drive unit and the transmission.

21. Synchronisation device for a double clutch transmission (25) according to one of the preceding claims, comprising at least one set of planet wheels (30, 40) and one assigned braking device (50), wherein the set of planet wheels with its sun wheel (34; 44), its planet wheel carrier (32; 42) and its hollow wheel (36; 46) is arranged or can be arranged substantially on the same axis as the transmission input shafts (20, 22) and wherein a first component (34; 42) out of the sun wheel, the planet wheel carrier and the hollow wheel is coupled or is able to be coupled to the first transmission input shaft (20) for the purposes of a rotary drive, a second component (32; 44) is coupled or able to be coupled to the second transmission input shaft (22) for the purposes of a rotary drive and a third component (36; 46) can be braked by means of the braking device (50) of the synchronisation device (26) supported or able to be supported directly or indirectly on a gear box.

## Revendications

1. Boîte de vitesses à double embrayage (25) pour un véhicule automobile, comprenant:
- un premier arbre d'entrée (20) correspondant à au moins un premier rapport de transmission, et un deuxième arbre d'entrée (22) correspondant à au moins un deuxième rapport de transmission, un des arbres d'entrée coaxiaux, c'est-à-dire un arbre d'entrée (22) externe conçu comme un arbre creux, entourant un arbre d'entrée interne (20) et
- un dispositif de synchronisation interne (26) conçu pour permettre, ou au moins soutenir, une synchronisation des vitesses de rotation correspondant aux rapports de transmission lors du passage d'un des rapports correspondant à un des arbres d'entrée vers un autre rapport correspondant à l'autre arbre d'entrée dans le sens d'un freinage ou d'une accélération,
**caractérisée en ce que** le dispositif de synchronisation (26) comprend au moins deux trains d'engrenage épicycloïdaux (30, 40) -et un dispositif de freinage correspondant (50), les deux trains d'engrenage épicycloïdaux (30, 40) étant décalés axialement l'un par rapport à l'autre et coaxiaux et en liaison fonctionnelle avec les arbres d'entrée (20, 22), et **en ce que**, parmi les roues planétaires, les porte-satellites et les couronnes à denture intérieure des deux trains d'engrenages épicycloïdaux (30, 40) un premier composant (34; 42) est couplé ou peut être couplé, avec un entraînement en rotation, au premier arbre d'entrée (20), un deuxième composant (32; 44) est couplé ou peut être couplé, avec un entraînement en rotation, au deuxième arbre d'entrée (22) et un troisième composant (36; 46) peut être freiné à l'aide du dispositif de freinage (50) du dispositif de synchronisation (26) qui s'appuie ou qui peut s'appuyer directement ou indirectement sur un carter de transmission.

2. Boîte de vitesses à double embrayage selon la revendication 1, **caractérisée en ce que** le premier composant (34; 42) est relié de manière solidaire au premier arbre d'entrée (20) ou est constitué par celui-ci ou est réalisé d'une seule pièce avec celui-ci et **en ce que** le deuxième composant (32; 44) est relié de manière solidaire au deuxième arbre d'entrée (22) ou constitué par celui-ci ou est réalisé d'une seule pièce avec celui-ci.

3. Boîte de vitesses à double embrayage selon la revendication 1 ou 2, **caractérisée en ce que** la couronne à denture intérieure (36; 46) sert de troisième composant et peut être freinée à l'aide du dispositif de freinage (50).

4. Boîte de vitesses à double embrayage selon l'une des revendications 1 à 3, **caractérisée en ce que** le dispositif de synchronisation (26) comprend deux trains d'engrenage épicycloïdaux (30, 40) décalés axialement l'un par rapport à l'autre, qui correspondent aux arbres d'entrée (20, 22) de façon à ce que i) lors de l'enclenchement d'un rapport supérieur ainsi que de l'enclenchement d'un rapport inférieur d'un premier rapport vers un deuxième rapport et ii) lors de l'enclenchement d'un rapport supérieur ainsi que de l'enclenchement d'un rapport inférieur d'un deuxième rapport vers un premier rapport, une synchronisation dans le sens d'un freinage ou d'une accélération est possible.

5. Boîte de vitesses à double embrayage selon l'une des revendications 1 à 4, **caractérisée en ce que** le train d'engrenage épicycloïdal où un (30) des deux trains d'engrenage épicycloïdaux correspond aux arbres d'entrée de façon à ce que sa roue planétaire (34) soit couplée ou puisse être couplée à l'arbre d'entrée interne (20), avec un entraînement en rotation, et que son porte-satellites (32) soit couplé ou puisse être couplé à l'arbre d'entrée externe (22) avec un entraînement en rotation.

6. Boîte de vitesses à double embrayage selon l'une des revendications 1 à 5, **caractérisée en ce que** le train d'engrenage épicycloïdal ou un (40) des deux trains d'engrenage épicycloïdaux correspond aux arbres d'entrée de façon à ce que son porte-satellites (42) soit couplé ou puisse être couplé à l'arbre d'entrée interne (20), avec un entraînement en rotation, et que sa roue planétaire soit couplée ou puisse être couplée à l'arbre d'entrée externe (22) avec un entraînement en rotation.

7. Boîte de vitesses à double embrayage selon la revendication 4 ainsi que selon la revendication 5 et la revendication 6, **caractérisée en ce que** la roue planétaire (44a) d'un des trains d'engrenage épicycloïdaux (40a) et le porte satellite (32a) de l'autre train d'engrenage épicycloïdal (30a) sont reliés entre eux pour une rotation commune et constituent de préférence des parties d'un seul composant monobloc.

8. Boîte de vitesses à double embrayage selon l'une des revendications précédentes, en tout cas selon la revendication 4, **caractérisée en ce que** les trains d'engrenage épicycloïdaux (30, 40) sont disposés dans une zone axiale des arbres d'entrée à l'intérieur du carter de transmission (24) dans lequel l'arbre d'entrée externe (22) se termine.

9. Boîte de vitesses à double embrayage selon la revendication 6 et la revendication 8, **caractérisée en ce que** le porte-satellites (42), qui est couplé ou qui peut être couplé à l'arbre d'entrée interne (20) avec un entraînement en rotation, est disposé axialement au-delà de l'extrémité de l'arbre d'entrée externe (22).

10. Boîte de vitesses à double embrayage selon l'une des revendications 1 à 9, **caractérisée en ce que** l'arbre d'entrée externe (22) comprend une partie proche de l'extrémité de l'arbre d'entrée externe ou une partie comprenant cette extrémité et une partie distante de cette extrémité, qui sont couplées entre elles de manière solidaire en rotation par l'intermédiaire d'un porte-satellites (32; 32a).

11. Boîte de vitesses à double embrayage selon l'une des revendications 1 à 9, **caractérisée en ce que** l'arbre d'entrée externe (22) comprend au moins une ouverture à travers laquelle un pignon satellite (38c), supporté par un porte-satellites (32c) couplé ou pouvant être couplé à l'arbre d'entrée externe (22) avec un entraînement en rotation, passe vers une roue planétaire (34c) couplée ou pouvant être couplée à l'arbre d'entrée interne (20) avec un entraînement en rotation.

12. Boîte de vitesses à double embrayage selon l'une des revendications précédentes, en tout cas selon la revendication 4, **caractérisée en ce que** les deux trains d'engrenage épicycloïdaux (30, 40; 30a, 40a) comprennent chacun des roues planétaires de même diamètre et/ou de même nombre de dents et/ou des pignons satellites de même diamètre et/ou de même nombre de dents et/ou des couronnes à denture intérieure de même diamètre et/ou de même nombre de dents.

13. Boîte de vitesses à double embrayage selon l'une des revendications précédentes, **caractérisée en ce que** le train d'engrenage épicycloïdal comprend trois pignons satellites plus précisément **en ce que** les trains d'engrenage épicycloïdaux (30, 40) comprennent chacun trois pignons satellites.

14. Boîte de vitesses à double embrayage selon l'une des revendications précédentes, **caractérisée en ce que** le porte-satellites plus précisément un des porte-satellites (32, 42) est conçu comme un disque avec au moins un arbre rotatif (80a) dépassant pour un pignon satellite correspondant.

15. Boîte de vitesses à double embrayage selon l'une des revendications précédentes, **caractérisée en ce que** le dispositif de freinage (50) est conçu de préférence comme un dispositif de freinage à disques de type humide.

16. Boîte de vitesses à double embrayage selon la revendication 15, **caractérisée en ce que** le dispositif de freinage à disques (50) comprend:
- au moins un actionneur (64), de préférence hydraulique,
- au moins un disque (52; 58) dépassant de préférence radialement vers l'extérieur, relié à la couronne à denture intérieure (36; 46) correspondante avec un entraînement en rotation et
- au moins un disque (54, 56; 60, 62) appuyée sur le carter de transmission pour empêcher la rotation; le disque relié avec un entraînement en rotation à la couronne à denture intérieure correspondante et le disque appuyé sur le carter de transmission pour empêcher la rotation pouvant être engrenés par frottement par l'intermédiaire de l'actionneur afin de freiner la couronne à denture intérieure.

17. Boîte de vitesses à double embrayage selon la revendication 16, **caractérisée en ce que** l'actionneur est conçu comme un appareil à vérin et piston annulaire hydraulique (64).

18. Boîte de vitesses à double embrayage selon la revendication 4 ainsi que selon la revendication 16 ou 17, **caractérisée en ce que**, aux deux trains d'engrenage épicycloïdaux (30, 40) correspond au moins un actionneur conçu comme un appareil à vérin et piston à double effet, de préférence comme un appareil à vérin et piston annulaire à double effet (64), grâce auquel soit la couronne à denture intérieure (36) du train d'engrenage épicycloïdal (30) soit la couronne à denture intérieure (46) du train d'engrenage épicycloïdal (40) peut être freinée.

19. Boîte de vitesses à double embrayage selon l'une des revendications précédentes, **caractérisée en ce que** des capteurs (84, 86, 90) pour la mesure d'au moins deux vitesses de rotations correspondant aux rapports de transmission et un dispositif de contrôle/régulation (82), qui reçoit les signaux correspondant aux vitesses de rotation mesurées, envoyés par les capteurs et qui contrôle sur la base des signaux reçus, avec un processus d'enclenchement, le dispositif de freinage (50) plus précisément au moins un des dispositifs de freinage, permettent d'effectuer ou au moins de favoriser une synchronisation à l'aide d'un freinage et/ou d'une accélération d'une vitesse de rotation.

20. Chaîne cinématique d'un véhicule automobile comprenant une unité d'entraînement (12), une boîte de vitesses (25) selon l'une des revendications précédentes et un double embrayage (14) pour la transmission du couple entre l'unité d'entraînement et la boîte de vitesses.

21. Dispositif de synchronisation pour une boîte de vitesses à double embrayage (25) selon l'une des revendications précédentes, comprenant au moins un train d'engrenage épicycloïdal (30, 40) et un dispositif de freinage (50) correspondant, dans lequel le train d'engrenage épicycloïdal est disposé ou peut être disposé, avec sa roue planétaire (34; 44), son porte-satellites (32; 42) et sa couronne à denture intérieure (36; 46), de manière coaxiale par rapport aux arbres d'entrée (20, 22) et, dans lequel grâce à la roue planétaire, au porte-satellites et à la couronne à denture intérieure, un premier composant (34; 42) est couplé ou peut être couplé au premier arbre d'entrée (20) avec un entraînement en rotation, un deuxième composant (32; 44) est couplé ou peut être couplé au deuxième arbre d'entrée (22) avec un entraînement en rotation et un troisième composant (36; 46) à l'aide duquel le dispositif de freinage(50) du dispositif de synchronisation (26) s'appuie ou peut s'appuyer directement ou indirectement sur un carter de transmission, peuvent être freinés.
